# EUROPEAN PATENT APPLICATION

(11) **EP 4 431 650 A1**
(43) Date of publication of application: **18.09.2024**
(21) Application number: 22892774.5
(22) Date of filing: 08.11.2022
(51) Int. Cl.: D04H 3/011, B65D 30/02, D01F 6/62, D04H 1/16, D04H 3/105

(54) **FILAMENT NONWOVEN FABRIC AND BAG-LIKE ARTICLE USING SAME**

(30) Priority: 09.11.2021 JP 2021182469
(71) Applicant: TOYOBO MC Corporation, Osaka 530-0001 (JP)
(72) Inventor: IWANE Masayoshi, Tsuruga-shi, Fukui 914-0047 (JP); NISHIMURA Hirokazu, Tsuruga-shi, Fukui 914-0047 (JP); YOSHIDA Hideo, Otsu-shi, Shiga 520-0292 (JP); MINEMURA Shinichi, Osaka-shi, Osaka 530-0001 (JP)
(74) Representative: Müller-Boré & Partner Patentanwälte PartG mbB
(86) International application number: PCT/JP2022/041584
(87) International publication number: WO 2023/085276

(57) **Abstract**

A long-fiber nonwoven fabric of the present invention contains a resin having a polyethylene terephthalate component of 99% or more. The long-fiber nonwoven fabric has a dry heat area shrinkage rate of 30% or more at 100°C for 3 minutes, and constituent fibers of the long-fiber nonwoven fabric have a birefringence index (Δn) of 10×10⁻³ to 60×10⁻³ and a specific gravity of 1.335 to 1.340 g/cm³.

## Description

### TECHNICAL FIELD

The present invention relates to a long-fiber nonwoven fabric excellent in shrinkability and a bag-shaped product.

### BACKGROUND ART

There is a technique of shrinking a nonwoven fabric by heating. For example, Patent Document 1 discloses a technique that can blend a nonwoven fabric with an amorphous polyester to shrink the nonwoven fabric at a low temperature and thus can contribute to energy saving with less thermal energy exerted on shrink processing. Patent Document 2 discloses a highly shrinkable nonwoven fabric containing short fibers of isophthalic acid copolymerized polyethylene terephthalate.

### PRIOR ART DOCUMENTS

### PATENT DOCUMENT

Patent Document 1: JP-A-2014-240531
Patent Document 2: JP-A-2003-336151

### SUMMARY OF THE INVENTION

### PROBLEMS TO BE SOLVED BY THE INVENTION

However, since the nonwoven fabric of Patent Document 1 is not polyethylene terephthalate alone but a blend, the nonwoven fabric is difficult to recycle. Since the nonwoven fabric of Patent Document 2 is a short-fiber nonwoven fabric, the short-fiber nonwoven fabric is inferior in strength to a long-fiber nonwoven fabric.

The present invention has been made in view of the above-described problems of the prior art, and an object of the present invention is to provide a long-fiber nonwoven fabric having good recyclability and high shrinkability, and further to provide a bag-shaped product that can be thermocompression-bonded using the same.

### MEANS FOR SOLVING THE PROBLEMS

As a result of intensive studies to solve the above problems, the present inventors have finally completed the present invention. That is, the present invention is as follows.
1. A long-fiber nonwoven fabric comprising a resin having a polyethylene terephthalate component of 99% or more,
   wherein the long-fiber nonwoven fabric has a dry heat area shrinkage rate of 30% or more at 100°C for 3 minutes, and
   constituent fibers of the long-fiber nonwoven fabric have a birefringence index (Δn) of 10×10⁻³ to 60×10⁻³ and a specific gravity of 1.335 to 1.340 g/cm³.
2. The long-fiber nonwoven fabric according to 1, wherein a ratio of a dry heat area shrinkage rate in a machine direction to a dry heat area shrinkage rate in a transverse direction is 0.95 to 1.05.
3. The long-fiber nonwoven fabric according to 1 or 2, wherein the constituent fibers are mechanically interlaced.
4. A bag-shaped product comprising the long-fiber nonwoven fabrics according to any one of 1 to 3,
   wherein the bag-shaped product includes a joining part in which the long-fiber nonwoven fabrics are joined to each other by thermocompression bonding.
5. The bag-shaped product according to 4, wherein joining strength of the joining part is 1/3 or less of base fabric strength of the long-fiber nonwoven fabric.
6. The bag-shaped product according to 4 or 5, wherein the bag-shaped product is brought into close contact with contents to be put into the bag-shaped product by heat shrinkage.

### EFFECT OF THE INVENTION

According to the present invention, a long-fiber nonwoven fabric excellent in shrinkability can be obtained. Since the long-fiber nonwoven fabric of the present invention contains a resin having a polyethylene terephthalate component of 99% or more, the long-fiber nonwoven fabric has good recyclability, and can provide a bag-shaped product that can be thermocompression-bonded.

### MODE FOR CARRYING OUT THE INVENTION

Hereinafter, the present invention will be more specifically described, but the present invention is not limited to the following, and can be appropriately modified within a range capable of conforming to the previously and posteriorly mentioned gist. All the modifications are included in the technological scope of the present invention.

### [Long-fiber nonwoven fabric]

A long-fiber nonwoven fabric of the present invention will be described. Above all, a resin used for the long-fiber nonwoven fabric of the present invention is preferably a polyester, and particularly preferably polyethylene terephthalate (PET) that is a general-purpose thermoplastic resin and is inexpensive. Other examples of the resin to be used include homopolyesters such as polybutylene terephthalate (PBT), polybutylene naphthalate (PBN), polyethylene naphthalate (PEN), polycyclohexane dimethyl terephthalate (PCHT), and polytrimethylene terephthalate (PTT). In the present invention, PET is used. This is because PET is excellent in characteristics such as strength and heat resistance. A polyester other than PET may be blended, if the content of the polyester other than PET is less than 1% by mass. The intrinsic viscosity of PET is not particularly limited, but is preferably 0.63 dl/g or more. The long-fiber nonwoven fabric of the present invention may contain additives that are usually used, for example, a paint, a pigment, a matting agent, an anti-static agent, a flame retardant, and reinforcing particles.

A method for obtaining the long-fiber nonwoven fabric of the present invention will be described. The method for producing the long-fiber nonwoven fabric is not particularly limited, but it is preferable to produce the long-fiber nonwoven fabric by a spunbonding method from the viewpoint of easily obtaining productivity and mechanical strength characteristics as the long-fiber nonwoven fabric. In order to obtain a long-fiber nonwoven fabric having a high shrinkage rate by the same method, a method is used, in which a resin to be used is formed into a fiber at a spinning speed lower than a condition for obtaining a stable filament by orientation crystallization, and the fiber is formed into a sheet. The spinning speed needs to be appropriately changed depending on the resin to be used, and the spinning speed in the case of using PET is preferably 2000 to 3500 m/min, and more preferably 2000 to 3000 m/min. The average fiber diameter of long fibers (single fibers) constituting the long-fiber nonwoven fabric is preferably about 1 to 20 dtex, and more preferably about 2 to 15 dtex. The basis weight of the long-fiber nonwoven fabric can be set in consideration of mechanical strength characteristics required for a final product, but is preferably 100 g/m² or more in order to obtain a stress for shrinking during a heat treatment. In consideration of the processability of a mechanical interlacing step after obtaining the long-fiber nonwoven fabric, the long-fiber nonwoven fabric is preferably subjected to pressure bonding such that the transportability of the long-fiber nonwoven fabric can be obtained. When the average fiber diameter and the basis weight are within the above ranges, properties such as strength, processability, and flexibility can be excellent in balance.

The birefringence index (Δn) of constituent fibers of the long-fiber nonwoven fabric of the present invention is preferably 60×10⁻³ or less. The birefringence index is more preferably 55×10⁻³ or less, and still more preferably 50×10⁻³ or less.

When the birefringence index of the fiber exceeds 60×10⁻³, polymer molecules are oriented and crystallized, so that the shrinkage of the long-fiber nonwoven fabric is inhibited and the shrinkage rate thereof is low. The birefringence index can be controlled by a discharge condition, a cooling condition, and a stretching condition during fiberization. In particular, in the case of determining a high shrinkage rate, the spinning speed is preferably 2000 to 3500 m/min, and more preferably 2500 to 3000 m/min.

The specific gravity of the constituent fibers of the long-fiber nonwoven fabric is preferably 1.330 to 1.340 g/cm³, and more preferably 1.335 to 1.340 g/cm³. Within the above range, properties such as strength, processability, and flexibility can be excellent in balance.

### [Mechanical interlacing method]

Next, a mechanical interlacing method will be described. As a method for mechanically interlacing fibers of a long-fiber nonwoven fabric, there are methods such as needle punching and water punching, but the needle punching is preferable because the needle punching eliminates the need for drying and can achieve high basis weight. Needles are penetrated by the needle punching and interlaced. Since the long-fiber nonwoven fabric of the present invention contains fibers having a high area shrinkage rate, the long-fiber nonwoven fabric has low filament strength, and the fibers are easily cut by the needle punching. Therefore, problems such as a decrease in strength after the needle punching easily occur. The number of penes and a needle depth need to be appropriately set according to the type of a needle to be used, and mechanical strength characteristics and a basis weight to be obtained, and are not limited.

### [Bag-shaped product]

The long-fiber nonwoven fabric of the present invention can be easily formed into a bag-shaped product by joining the long-fiber nonwoven fabric by thermocompression bonding. The bag-shaped product containing the long-fiber nonwoven fabric of the present invention is also included in the scope of the present invention. The bag-shaped product of the present invention includes a joining part in which the long-fiber nonwoven fabrics are joined to each other by thermocompression bonding. In the bag-shaped product of the present invention, the joining strength of the joining part is preferably 1/3 or less of the strength of the long-fiber nonwoven fabric. Within this range, when the bag-shaped product is desired to be opened from the joining part, the bag-shaped product can be easily opened. The bag-shaped product can be brought into close contact with contents to be put into the bag-shaped product by heat shrinkage.

### EXAMPLES

Hereinafter, the present invention will be described in more detail by way of Examples. However, the following Examples do not limit the present invention, and all modifications and implementations without departing from the gist of the present invention are included in the technical scope of the present invention.

First, a characteristic evaluation method will be described.

### <Area shrinkage rate>

In accordance with 6.10 of JIS L 1913 (2010), a long-fiber nonwoven fabric is cut into a 250 mm square at any ten positions, and marks indicating a length of 200 mm are attached at three positions in each of a machine direction and a transverse direction. A heat treatment is performed at 100°C for 3 minutes in a constant temperature dryer, and the area shrinkage rate of the long-fiber nonwoven fabric is determined from the dimensional change of the long-fiber nonwoven fabric before and after the heat treatment.

### <Birefringence index>

The retardations and fiber diameters of single fibers taken out from the long-fiber nonwoven fabric are determined using a deflection microscope equipped with a Berec compensator, and the average value of n = 5 is taken as the birefringence index (Δn) of the fibers.

### <Specific gravity>

The specific gravities of the fibers are measured at n = 4 using a density gradient tube, and the average value of the specific gravities is determined.

### <Ratio of dry heat area shrinkage rate in machine direction to dry heat area shrinkage rate in transverse direction>

In accordance with 6.10 of JIS L 1913 (2010), a sample obtained by cutting a long-fiber nonwoven fabric into a 250 mm square at any ten positions is used, and marks indicating a length of 200 mm are attached at three positions of the sample in each of a machine direction and a transverse direction. The sample is heat-treated at 100°C for 3 minutes in a constant temperature dryer, and a ratio of a dry heat area shrinkage rate in the machine direction to a dry heat area shrinkage rate in the transverse direction (machine direction/transverse direction) is determined from the dimensional change of the sample before and after the heat treatment.

### <Joining strength>

Two samples are cut from the interlaced long-fiber nonwoven fabric, and heat-sealed at 268°C for 2 minutes in a transverse direction using a heat sealer (Auto Sealer FA-450-5W series manufactured by Fuji Impulse Co., Ltd.). According to Tensile strength and elongation (ISO method) of JIS L 1913 (2010) 6.3, three sample pieces having a width of 50 mm and a length of 200 mm from the product width of the spread heat-sealed sample are pulled at a gripping interval of 100 mm and measured at a speed of 200 mm/min using the same tester as a constant speed elongation type tensile tester (Tensilon manufactured by ORIENTEC CORPORATION), and the average value of the obtained tensile strengths is taken as joining strength (N/5 cm).

### <Basis weight>

The interlaced long-fiber nonwoven fabric is measured in a size of 20 cm×20 cm according to the method described in JIS L 1913 (2010), and the mass per unit area is measured.

### <Base fabric strength>

According to Tensile strength and elongation (ISO method) of JIS L 1913 (2010) 6.3, five sample pieces having a width of 50 mm and a length of 200 mm from the product width of the interlaced long-fiber nonwoven fabric are pulled at a gripping interval of 100 mm and measured at a speed of 200 mm/min using the same tester as a constant speed elongation type tensile tester (Tensilon manufactured by ORIENTEC CORPORATION), and the average value of the obtained tensile strengths is taken as base fabric strength (N/5 cm).

### (Example 1)

As a raw material of a nonwoven fabric, a polyester was used, which contained 99% or more of a polyethylene terephthalate component having an intrinsic viscosity of 0.63 dl/g. Spinning was performed under conditions of a spinning temperature of 285°C and a single hole discharge rate of 1.74 g/min from a spinneret having an orifice diameter of 0.30 mm. Dry air was supplied at a pressure of 0.85 kg/cm² to an ejector disposed at a position of 900 mm immediately below the spinneret while cooling with 20°C air having an air velocity of 0.75 m/sec from a position of 120 mm immediately below the spinneret. Stretching was performed in one step, and a fiber bundle was deposited on a conveyor net at a position of 1.0 m downward while a speed was adjusted so that the fiber bundle was opened and fiber arrangement became random. A long-fiber nonwoven fabric was obtained, which had a single yarn fineness of 6.0 dtex, a converted spinning speed of 2800 m/min, Δn of 41×10⁻³, a specific gravity of 1.338 g/cm³, a ratio of a dry heat area shrinkage rate in a machine direction to a dry heat area shrinkage rate in a transverse direction of 1.01, and a basis weight of 200 g/m².

Next, embossing was performed under conditions of 60°C and a linear pressure of 30 kN/m using embossing rolls in which pyramidal trapezoidal projections having a pressure bonding area ratio of 8% were arranged in a staggered manner, which were placed in-line, to obtain the thermocompression bonding type long-fiber nonwoven fabric. One surface of the thermocompression bonding type long-fiber nonwoven fabric was subjected to an interlacement treatment by needle punching under conditions of a needle density of 95 needles/cm² and a needle depth of 10 mm to obtain the interlaced long-fiber nonwoven fabric.

The interlaced long-fiber nonwoven fabric was cut into a length of 25 cm and a width of 10 cm, preheated at 190°C for 10 seconds, then folded in half, and thermocompression-bonded under conditions of a joining temperature of 190°C, a joining pressure of 15 kg/cm², and a joining time of 5 seconds at a position of 1 cm from the end of the long-fiber nonwoven fabric to obtain a bag-shaped product including a joining part. The entire surface of the thermocompression-bonded portion was joined to form the joining part. Contents were put into the bag-shaped product, and the bag-shaped product was heat-treated at 100°C for 3 minutes to obtain the heat-shrunk bag-shaped product. It could be visually confirmed that the bag-shaped product and the contents were brought into close contact with each other due to heat shrinkage. Furthermore, both ends in the machine direction of the joining part of the bag-shaped product were cut, and the joining strength was evaluated by the method described above.

### (Example 2)

As a raw material of a long-fiber nonwoven fabric, a polyester was used, which contained 99% or more of a polyethylene terephthalate component having an intrinsic viscosity of 0.63 dl/g. Spinning was performed under conditions of a spinning temperature of 285°C and a single hole discharge rate of 1.74 g/min from a spinneret having an orifice diameter of 0.30 mm. Dry air was supplied at a pressure of 0.85 kg/cm² to an ejector disposed at a position of 900 mm immediately below the spinneret while cooling with 20°C air having an air velocity of 0.75 m/sec from a position of 120 mm immediately below the spinneret. Stretching was performed in one step, and a fiber bundle was deposited on a conveyor net at a position of 1.0 m downward while a speed was adjusted so that the fiber bundle was opened and fiber arrangement became random. A long-fiber nonwoven fabric was obtained, which had a single yarn fineness of 6.0 dtex, a converted spinning speed of 2800 m/min, Δn of 41×10⁻³, a specific gravity of 1.338 g/cm³, a ratio of a dry heat area shrinkage rate in a machine direction to a dry heat area shrinkage rate in a transverse direction of 1.01, and a basis weight of 200 g/m².

Next, embossing was performed under conditions of 60°C and a linear pressure of 30 kN/m using embossing rolls in which pyramidal trapezoidal projections having a pressure bonding area ratio of 8% were arranged in a staggered manner, which were placed in-line, to obtain the thermocompression bonding type long-fiber nonwoven fabric. One surface of the thermocompression bonding type long-fiber nonwoven fabric was subjected to an interlacement treatment by needle punching under conditions of a needle density of 49 needles/cm² and a needle depth of 8 mm, and then to an interlacement treatment by needle punching under conditions of a density of 51 needles/cm² and a needle depth of 8 mm from the penetrating surface of the needle punching to obtain the interlaced long-fiber nonwoven fabric.

The interlaced long-fiber nonwoven fabric was cut into a length of 25 cm and a width of 10 cm, preheated at 190°C for 10 seconds, then folded in half, and thermocompression-bonded under conditions of a joining temperature of 190°C, a joining pressure of 12 kg/cm², and a joining time of 5 seconds at a position of 1 cm from the end of the long-fiber nonwoven fabric to obtain a bag-shaped product including a joining part. The entire surface of the thermocompression-bonded portion was joined to form the joining part. Contents were put into the bag-shaped product, and the bag-shaped product was heat-treated at 100°C for 3 minutes to obtain the heat-shrunk bag-shaped product. It could be visually confirmed that the bag-shaped product and the contents were brought into close contact with each other due to heat shrinkage. Furthermore, both ends in the machine direction of the joining part of the bag-shaped product were cut, and the joining strength was evaluated by the method described above.

### (Example 3)

As a raw material of a long-fiber nonwoven fabric, a polyester was used, which contained 99% or more of a polyethylene terephthalate component having an intrinsic viscosity of 0.63 dl/g. Spinning was performed under conditions of a spinning temperature of 285°C and a single hole discharge rate of 1.74 g/min from a spinneret having an orifice diameter of 0.30 mm. Dry air was supplied at a pressure of 0.85 kg/cm² to an ejector disposed at a position of 900 mm immediately below the spinneret while cooling with 20°C air having an air velocity of 0.75 m/sec from a position of 120 mm immediately below the spinneret. Stretching was performed in one step, and a fiber bundle was deposited on a conveyor net at a position of 1.0 m downward while a speed was adjusted so that the fiber bundle was opened and fiber arrangement became random. A long-fiber nonwoven fabric was obtained, which had a single yarn fineness of 6.7 dtex, a converted spinning speed of 2500 m/min, Δn of 48×10⁻³, a specific gravity of 1.335 g/cm³, a ratio of a dry heat area shrinkage rate in a machine direction to a dry heat area shrinkage rate in a transverse direction of 1.02, and a basis weight of 150 g/m².

Next, embossing was performed under conditions of 60°C and a linear pressure of 30 kN/m using embossing rolls in which pyramidal trapezoidal projections having a pressure bonding area ratio of 8% were arranged in a staggered manner, which were placed in-line, to obtain the thermocompression bonding type long-fiber nonwoven fabric. One surface of the thermocompression bonding type long-fiber nonwoven fabric was subjected to an interlacement treatment by needle punching under conditions of a needle density of 49 needles/cm² and a needle depth of 8 mm, and then to an interlacement treatment by needle punching under conditions of a density of 51 needles/cm² and a needle depth of 8 mm from the penetrating surface of the needle punching to obtain the interlaced long-fiber nonwoven fabric.

The interlaced long-fiber nonwoven fabric was cut into a length of 25 cm and a width of 10 cm, preheated at 190°C for 10 seconds, then folded in half, and thermocompression-bonded under conditions of a joining temperature of 170°C, a joining pressure of 10 kg/cm², and a joining time of 5 seconds at a position of 1 cm from the end of the long-fiber nonwoven fabric to obtain a bag-shaped product including a joining part. The entire surface of the thermocompression-bonded portion was joined to form the joining part. Contents were put into the bag-shaped product, and the bag-shaped product was heat-treated at 100°C for 3 minutes to obtain the heat-shrunk bag-shaped product. It could be visually confirmed that the bag-shaped product and the contents were brought into close contact with each other due to heat shrinkage. Furthermore, both ends in the machine direction of the joining part of the bag-shaped product were cut, and the joining strength was evaluated by the method described above.

### (Comparative example 1)

As a raw material of a long-fiber nonwoven fabric, a polyester was used, which contained 99% or more of a polyethylene terephthalate component having an intrinsic viscosity of 0.63 dl/g. Spinning was performed under conditions of a spinning temperature of 285°C and a single hole discharge rate of 1.74 g/min from a spinneret having an orifice diameter of 0.30 mm. Dry air was supplied at a pressure of 0.85 kg/cm² to an ejector disposed at a position of 900 mm immediately below the spinneret while cooling with 20°C air having an air velocity of 0.75 m/sec from a position of 120 mm immediately below the spinneret. Stretching was performed in one step, and a fiber bundle was deposited on a conveyor net at a position of 1.0 m downward while a speed was adjusted so that the fiber bundle was opened and fiber arrangement became random. A long-fiber nonwoven fabric was obtained, which had a single yarn fineness of 4.8 dtex, a converted spinning speed of 3800 m/min, Δn of 70×10⁻³, a specific gravity of 1.348 g/cm³, a ratio of a dry heat area shrinkage rate in a machine direction to a dry heat area shrinkage rate in a transverse direction of 1.05, and a basis weight of 200 g/m².

Next, embossing was performed under conditions of 60°C and a linear pressure of 30 kN/m using embossing rolls in which pyramidal trapezoidal projections having a pressure bonding area ratio of 8% were arranged in a staggered manner, which were placed in-line, to obtain the thermocompression bonding type long-fiber nonwoven fabric. One surface of the thermocompression bonding type long-fiber nonwoven fabric was subjected to an interlacement treatment by needle punching under conditions of a needle density of 95 needles/cm² and a needle depth of 10 mm to obtain the interlaced long-fiber nonwoven fabric.

The interlaced long-fiber nonwoven fabric was cut into a length of 25 cm and a width of 10 cm, preheated at 100°C for 10 seconds, then folded in half, and thermocompression-bonded under conditions of a joining temperature of 100°C, a joining pressure of 15 kg/cm², and a joining time of 5 seconds at a position of 1 cm from the end of the long-fiber nonwoven fabric to obtain a bag-shaped product including a joining part. The entire surface of the thermocompression-bonded portion was the joining part. Contents were put into the bag-shaped product, and the bag-shaped product was heat-treated at 100°C for 3 minutes to obtain the heat-shrunk bag-shaped product. It could be visually confirmed that the bag-shaped product and the contents were brought into close contact with each other although heat shrinkage was weak. Furthermore, both ends in the machine direction of the joining part of the bag-shaped product were cut, and the joining strength was evaluated by the method described above.

### (Comparative Example 2)

As a raw material of a long-fiber nonwoven fabric, a polyester was used, which contained 99% or more of a polyethylene terephthalate component having an intrinsic viscosity of 0.63 dl/g. Spinning was performed under conditions of a spinning temperature of 285°C and a single hole discharge rate of 1.74 g/min from a spinneret having an orifice diameter of 0.30 mm. Dry air was supplied at a pressure of 2.30 kg/cm² to an ejector disposed at a position of 900 mm immediately below the spinneret while cooling with 20°C air having an air velocity of 0.75 m/sec from a position of 120 mm immediately below the spinneret. Stretching was performed in one step, and a fiber bundle was deposited on a conveyor net at a position of 1.0 m downward while a speed was adjusted so that the fiber bundle was opened and fiber arrangement became random. A long-fiber nonwoven fabric was obtained, which had a single yarn fineness of 4.7 dtex, a converted spinning speed of 4500 m/min, Δn of 103×10⁻³, a specific gravity of 1.370 g/cm³, a ratio of a dry heat area shrinkage rate in a machine direction to a dry heat area shrinkage rate in a transverse direction of 1.05, and a basis weight of 105 g/m².

Next, embossing was performed under conditions of 60°C and a linear pressure of 30 kN/m using embossing rolls in which pyramidal trapezoidal projections having a pressure bonding area ratio of 8% were arranged in a staggered manner, which were placed in-line, to obtain the thermocompression bonding type long-fiber nonwoven fabric. One surface of the thermocompression bonding type long-fiber nonwoven fabric was subjected to an interlacement treatment by needle punching under conditions of a needle density of 58 needles/cm² and a needle depth of 8 mm to obtain the interlaced long-fiber nonwoven fabric.

The interlaced long-fiber nonwoven fabric was cut into a length of 25 cm and a width of 10 cm, preheated at 190°C for 10 seconds, then folded in half, and thermocompression-bonded under conditions of a joining temperature of 190°C, a joining pressure of 3 kg/cm², and a joining time of 5 seconds at a position of 1 cm from the end of the long-fiber nonwoven fabric to obtain a bag-shaped product including a joining part. Only a part of the thermocompression-bonded portion was joined to form the joining part. Contents were put into the bag-shaped product, and the bag-shaped product was heat-treated at 100°C for 3 minutes to obtain the heat-shrunk bag-shaped product. It could not be visually confirmed that the bag-shaped product and the contents were brought into close contact with each other. Furthermore, both ends in the machine direction of the joining part of the bag-shaped product were cut, and the joining strength was evaluated by the method described above.

Table 1 shows the measurement results of respective physical property values.

**[Table 1]**

| | | Unit | Example 1 | Example 2 | Example 3 | Comparative Example 1 | Comparative Example 2 |
|---|---|---|---|---|---|---|---|
| Area shrinkage rate [100°C × 3 minutes] | | % | 58 | 58 | 61 | 27 | 8 |
| Ethylene terephthalate component of polymer | | % | 99 | 99 | 99 | 99 | 99 |
| Δn | | × 10⁻³ | 41 | 41 | 48 | 70 | 103 |
| Specific gravity | | g/cm³ | 1.338 | 1.338 | 1.335 | 1.348 | 1.37 |
| Spinning speed | | m/min | 2800 | 2800 | 2500 | 3800 | 4500 |
| Ratio of dry heat area shrinkage rate in machine direction to dry heat area shrinkage rate in transverse direction | | - | 1.01 | 1.01 | 1.02 | 1.05 | 1.05 |
| Mechanical interlacing | Penetration | N/cm² | 95 | 100 | 100 | 95 | 58 |
| | Needle depth | mm | 10 | 8 | 8 | 10 | 8 |
| | Interlaced surface | One side/ both sides | One side | Both sides | Both sides | One side | One side |
| Thermocompression bonding of joining part | | - | Entire surface | Entire surface | Entire surface | Entire surface | Part |
| Adhesion with contents due to heat shrinkage | | - | Presence | Presence | Presence | Presence | Absence |
| Base fabric mass | | g/m² | 200 | 200 | 150 | 200 | 105 |
| Base fabric strength | | N/5 cm | 246 | 267 | 185 | 580 | 350 |
| Joining strength | | N/5 cm | 48 | 65 | 52 | 18 | 14 |
| Joining pressure | | kg/cm² | 15 | 12 | 10 | 15 | 3 |
| Joining temperature | | °C | 190 | 190 | 170 | 100 | 190 |
| Joining time | | sec | 5 | 5 | 5 | 10 | 5 |

From Table 1, it can be seen that each of Examples 1 to 3 having a dry heat area shrinkage rate of 30% or more at 100°C for 3 minutes, an ethylene terephthalate component of 99% or more as a constituent polymer, a birefringence index (Δn) of 10×10⁻³ to 60×10⁻³, and a specific gravity of 1.335 to 1.340 g/cm³ is a long-fiber nonwoven fabric having high shrinkability, and is excellent in strength. Since the long-fiber nonwoven fabric contains the polyester containing the polyethylene terephthalate component of 99% or more, the long-fiber nonwoven fabric has good recyclability.

### INDUSTRIAL APPLICABILITY

According to the present invention, it becomes possible to provide a long-fiber nonwoven fabric having good recyclability, high shrinkability, excellent mechanical strength characteristics, light weight, and excellent handleability, and the long-fiber nonwoven fabric can greatly contribute to the industrial world.

## Claims

1. A long-fiber nonwoven fabric comprising a resin having a polyethylene terephthalate component of 99% or more,
wherein the long-fiber nonwoven fabric has a dry heat area shrinkage rate of 30% or more at 100°C for 3 minutes, and
constituent fibers of the long-fiber nonwoven fabric have a birefringence index (Δn) of 10×10⁻³ to 60×10⁻³ and a specific gravity of 1.335 to 1.340 g/cm³.

2. The long-fiber nonwoven fabric according to claim 1, wherein a ratio of a dry heat area shrinkage rate in a machine direction to a dry heat area shrinkage rate in a transverse direction is 0.95 to 1.05.

3. The long-fiber nonwoven fabric according to claim 1 or 2, wherein the constituent fibers are mechanically interlaced.

4. A bag-shaped product comprising the long-fiber nonwoven fabrics according to claim 1 or 2,
wherein the bag-shaped product includes a joining part in which the long-fiber nonwoven fabrics are joined to each other by thermocompression bonding.

5. The bag-shaped product according to claim 4, wherein joining strength of the joining part is 1/3 or less of base fabric strength of the long-fiber nonwoven fabric.

6. The bag-shaped product according to claim 4, wherein the bag-shaped product is brought into close contact with contents to be put into the bag-shaped product by heat shrinkage.
